# FASCICULE DE BREVET EUROPEEN

(11) **EP 1 093 196 B1**
(45) Date de publication et mention de la délivrance du brevet: **23.07.2003**
(21) Numéro de dépôt: 00122486.4
(22) Date de dépôt: 13.10.2000
(51) Int. Cl.: H01R 43/00, B60R 16/02

(54) **Dispositif de protection et de mise en place de faisceau de câbles**
Vorrichtung zum Schützen und Montieren eines Kabelbündels
Device for protecting and mounting a cable bundle

(30) Priorité: 15.10.1999 FR 9912870
(43) Date de publication de la demande: 18.04.2001
(73) Titulaire: S-Y Systems Technologies France SAS, 92257 La Garenne Colombes (FR)
(72) Inventeur: Degardins, Pascal, 31000 Toulouse (FR)
(74) Mandataire: Patentanwaltskanzlei WILHELM & BECK

(56) Documents cités:
- DE-U- 8 708 258
- US-A- 4 171 123
- US-A- 5 016 859
- US-A- 5 480 203

## Description

L'invention est du domaine du câblage électrique de véhicules. En particulier elle concerne le câblage qui relie une planche de bord aux organes du compartiment moteur dans une automobile.

Dans ce domaine, le compartiment moteur et l'habitacle sont naturellement séparés par un tablier de protection des occupants du véhicules contre l'environnement et les risques potentiels liés au compartiment moteur (feu, acide, huile etc.). Ce tablier sert également de renfort structurel en cas de choc latéral au véhicule.

Le problème de la traversée de ce tablier pour assurer la connexion des organes moteur aux éléments de la planche de bord est classiquement résolu par la mise en place d'un connecteur à multiples broches traversant le tablier. Cette solution pose cependant des problèmes de fiabilité et de coût. Une seconde solution connue dans l'art antérieur utilise le passage du faisceau des câbles au travers d'un orifice de dimensions aussi faibles que possible - par exemple 80 mm de diamètre -, muni d'une bague destiné à améliorer l'étanchéité du point de passage des câbles. Une étanchéité intercâbles est alors prévue, par exemple par utilisation de résine ou autre matériau résistant à l'environnement moteur.

L'invention décrite dans la présente demande de brevet a pour contexte cette seconde solution du passage des câbles dans un orifice de relativement faibles dimensions au regard de la quantité très importante de câbles et de connecteurs qui doivent éventuellement y être passés.

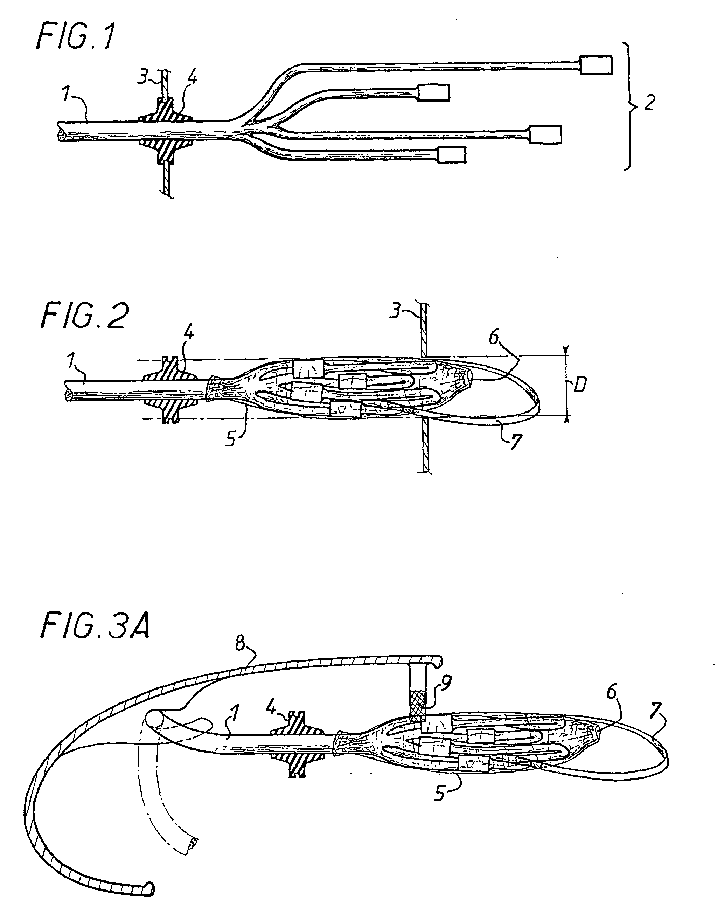

On comprend que sur la chaîne d'assemblage des véhicules, le faisceau de câbles doit être inséré d'un bloc au travers du tablier. Le faisceau comporte alors usuellement une bague d'étanchéité (voir figure 1) qui vient s'emboîter en place au niveau de l'orifice ménagé dans le tablier.

Le document US 5 480 203 A, considéré comme représentant l'état de la technique le plus proche, décrit un dispositif de protection et de mise en place d'un faisceau de câbles comportant un emballage déformable enveloppant une extrémité du faisceau.

La présente invention propose un nouveau mode de protection et de mise en place d'un faisceau de câbles à travers un orifice d'une plaque rigide, présentant une grande simplicité d'utilisation, et un gain de temps significatif lors de cette utilisation.

Suivant l'invention, le dispositif de protection et de mise en place d'un faisceau de câbles électriques à travers un orifice d'une plaque rigide, décrit dans la revendication 1.

La description et les dessins qui suivent permettront de mieux comprendre les buts et avantages de l'invention. Il est clair que cette description n'est donnée qu'à titre d'exemple, et n'a pas de caractère limitatif.

Dans les dessins :
- la figure 1 représente, en vue de côté, un faisceau de câbles en place au travers d'un tablier séparant le compartiment moteur de l'habitacle d'un véhicule ;
- la figure 2 représente de façon analogue, un faisceau de câbles enveloppé dans un dispositif selon l'invention, avant sa mise en place au travers du tablier ;
- les figures 3A à 3E montrent de façon schématique la mise en place du faisceau au travers du tablier.

Sur toutes les figures, la partie gauche représente la zone habitacle du véhicule, et la partie droite représente le compartiment moteur. On voit qu'un faisceau de câbles 1 peut comporter un grand nombre de branches terminales 2. Le tablier 3 comporte un orifice dans lequel doivent passer toutes ces branches terminales 2, et dans lequel doit venir se placer un dispositif d'étanchéité, sous la forme d'une bague d'étanchéité 4, par exemple à deux rebords en forme de disques minces.

Selon l'invention, le faisceau de câbles 1, qui comporte également une bague d'étanchéité pré-installée 4, a sa partie avant (à droite de la bague d'étanchéité sur les figures) préalablement enveloppée dans un film plastique 5 très mince, qui vient plaquer les câbles les uns contre les autres, autant que possible sous une section correspondante aux dimensions de l'orifice prévu dans le tablier 3 (et par exemple à un diamètre D dans le cas d'orifice circulaire). Un tel film plastique peut être soit du type utilisé pour l'emballage de produits alimentaires tels des packs de lait, soit de type thermo-rétractable.

Ce film plastique 5 est fermé à son extrémité avant 6. Une poignée de traction souple 7 est solidarisée au film 6 au niveau des bords latéraux avant dudit film 5, de manière à permettre d'exercer un effort de traction sur le faisceau par l'intermédiaire du film 5. Le mode de solidarisation est connu de l'homme du métier et sort du cadre de la présente invention.

La poignée 7, par exemple réalisée également en matière plastique, est de dimensions adaptées à supporter le poids du faisceau de câbles, et à exercer sur ce faisceau une traction de l'ordre de 20 kg par exemple.

La résistance du film est choisie de façon à pouvoir supporter un effort de traction de 15 kg (valeur non limitative donnée ici à titre d'exemple), suffisant pour entraîner le passage du faisceau 1 au travers de l'orifice du tablier 3.

Cependant, cette résistance du film 5 est choisie simplement légèrement supérieure à cette valeur, de manière à provoquer le déchirement du film plastique dès qu'un effort de traction supérieure à une valeur prédéterminée est exercé sur la poignée, ce qui libère ensuite les branches terminales 2 des câbles, et permet leur mise en place.

Dans la mise en oeuvre décrite ici à titre d'exemple, une zone "faible" est aménagée longitudinalement dans le film, créant ainsi une zone de rupture préférentielle.

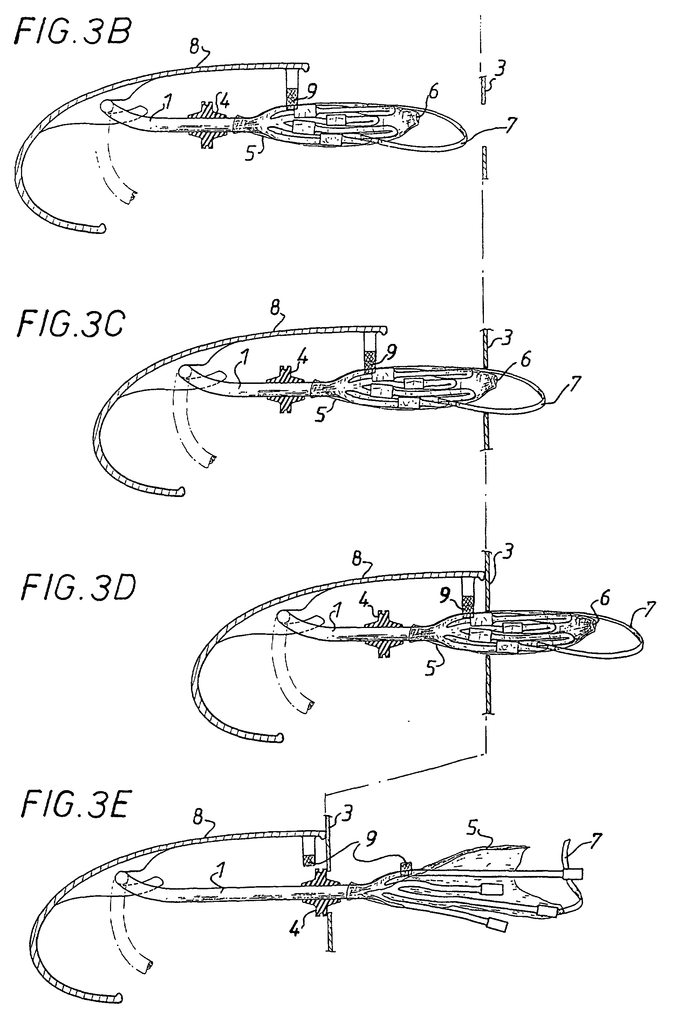

Le mode d'utilisation du dispositif est illustré par les figures 3A à 3E. Comme on le voit sur la figure 3A, le faisceau 1, accompagné de la bague d'étanchéité 4, du film plastique 5 et de la poignée de traction 7, est initialement livré avec le cockpit (tableau de bord) 8, auquel le film est solidarisé par un lien sécable 9, uniquement adapté à supporter le poids de la partie avant du faisceau 1 et à le prépositionner au regard de l'orifice du tablier 3 (figures 3B à 3D). Le film plastique 5 présente une extrémité avant 6 en ogive, qui assure que lors du positionnement du cockpit, le film plastique 5 s'auto-centre dans la traversée du tablier 3, et la poignée de traction 7 apparaît côté moteur.

Dès que l'extrémité avant du faisceau 1 passe au travers de l'orifice du tablier 3, un opérateur saisit la poignée 7 et tire vigoureusement le faisceau de câbles 1 à travers l'orifice.

Quand la partie emballée des câbles est passée dans le compartiment moteur, la bague d'étanchéité venant buter contre le rebord du tablier, une traction supplémentaire de la part de l'opérateur provoque la rupture du film le long de la zone de rupture préférentielle, et la libération des câbles (figure 3E). La bague d'étanchéité est ensuite mise en place de façon traditionnelle.

On comprend que ce dispositif procure une grande facilité de mise en place du faisceau de câbles au travers du tablier 3.

Il est clair que la présente invention s'applique particulièrement au montage par robot du cockpit dans lequel le faisceau de câbles doit être installé. Il n'est en effet pas possible de prévoir une intervention humaine dans l'habitacle durant cette phase.

La portée de la présente invention ne se limite pas aux détails des formes de réalisation ci-dessus considérées à titre d'exemple, mais s'étend au contraire aux modifications à la portée de l'homme de l'art.

## Revendications

1. Dispositif de protection et de mise en place d'un faisceau de câbles électriques à travers un orifice d'une plaque rigide (3) de dimensions prédéterminées, comportant un emballage déformable (5) réalisé en matière plastique mince et enveloppant les branches d'au moins une extrémité du faisceau (1) de manière à les serrer dans une section sensiblement circulaire de valeur prédéterminée, et une poignée de traction (7) disposée au bout de cet emballage (5), **caractérisé en ce que** l'emballage (5) est d'épaisseur adaptée à permettre sa rupture pour une force légèrement supérieure à la force longitudinale nécessaire au passage du faisceau (1) dans ledit orifice.

2. Dispositif selon la revendication 1, **caractérisé en ce que** l'emballage (5) présente une extrémité avant (6) en ogive.

3. Dispositif selon l'une quelconque des revendications 1 ou 2, **caractérisé en ce qu'**une zone faible est aménagée longitudinalement dans l'emballage (5), créant ainsi une zone de rupture préférentielle.

## Patentansprüche

1. Vorrichtung zum Schutz und zur Anbringung eines elektrischen Kabelbaums durch eine Öffnung einer starren Platte (3) vorbestimmter Abmessungen hindurch, aufweisend eine verformbare Umhüllung (5), die in dünnem Kunststoff ausgeführt ist und die Stränge von mindestens einem Ende des Kabelbaums (1) derart umhüllt, dass die Stränge in einem Querschnitt zusammengedrückt werden, der im wesentlichen kreisförmig und eines vorbestimmten Werts ist, und einen Ziehgriff (7), der am Ende dieser Umhüllung (5) angeordnet ist,
**dadurch gekennzeichnet, dass**
die Umhüllung (5) eine Dicke hat, die angepasst ist, um ihr Zerreißen bei einer Kraft zu gestatten, die etwas größer als die Längskraft ist, die für das Passieren des Kabelbaums (1) in der Öffnung erforderlich ist.

2. Vorrichtung nach Anspruch 1, **dadurch gekennzeichnet, dass** die Umhüllung (5) ein spitzbogenförmiges Vorderende (6) aufweist.

3. Vorrichtung nach Anspruch 1 oder 2, **dadurch gekennzeichnet, dass** längs in der Umhüllung (5) eine schwache Zone angeordnet ist, die somit eine bevorzugte Reißzone bildet.

## Claims

1. Device for protecting and installing an electrical cable bundle through an opening in a rigid panel (3) of predetermined size, including a deformable wrapping (5) made of thin plastic that envelops the branches of at least one end of the bundle (1) in order to constrict them in an approximately circular section of a predetermined value, and a pulling handle (7) placed at the end of this wrapping (5), **characterised in that** the wrapping (5) is of a thickness suitable to allow it to break as a result of a force slightly higher than the longitudinal force necessary to pull the bundle (1) through said opening.

2. Device according to Claim 1, **characterised in that** the wrapping (5) is pointed at its front end (6).

3. Device according to either one of Claims 1 or 2, **characterised in that** a weak zone is provided longitudinally in the wrapping (5), thus creating a preferential tearing zone.
